# EUROPÄISCHE PATENTANMELDUNG

(11) **EP 4 241 906 A1**
(43) Veröffentlichungstag der Anmeldung: **13.09.2023**
(21) Anmeldenummer: 22161632.9
(22) Anmeldetag: 11.03.2022
(51) Int. Cl.: B22F 10/28, B33Y 10/00, B33Y 70/00, C22C 1/04, C22C 19/05

(54) **NICKELBASISLEGIERUNG, BAUTEIL, PULVER UND VERFAHREN**

(71) Anmelder: Siemens Aktiengesellschaft, 80333 München (DE)
(72) Erfinder: Logvinov, Ruslan, 95447 Bayreuth (DE)
(74) Vertreter: Siemens Patent Attorneys

(57) **Zusammenfassung**

Die Erfindung betrifft eine Nickelbasislegierung, die zumindest folgende Legierungselemente in Gew. % aufweist:
Chrom (Cr)
14,4 - 15,6
Tantal (TA)
9 - 11
Cobalt (Co)
5,0 - 5,6
Aluminium (Al)
4,5 - 5
Wolfram (W)
3,4 - 4,0
Molybdän (Mo)
0,9 - 1,1.

Die Legierung zeichnet sich dadurch aus, dass die Legierungsbestandteile Bor, Tantal und Hafnium folgende Anteile aufweisen:
Tantal (Ta)
9,0 - 11,0
Hafnium (Hf)
0,3 - 0,6
Bor (B)
0,04 - 0,06
wobei der Rest Nickel, sowie unvermeidbare Verunreinigungen umfasst.

## Beschreibung

Die Erfindung betrifft eine Nickelbasislegierung nach Patentanspruch 1, ein Bauteil nach Patentanspruch 5, sowie ein Pulver nach Patentanspruch 8 und ein Verfahren nach Patentanspruch 9.

Nickelbasislegierungen weisen eine hohe Korrosionsfestigkeit und eine hohe Temperaturfestigkeit, insbesondere eine hohe Kriechfestigkeit bei hohen Temperaturen auf. Legierungen, die letztere Eigenschaften aufweisen, werden auch als sogenannte Superlegierungen auf Nickelbasis bezeichnet. Diese Legierungen finden insbesondere im Triebwerksbau oder in Turbinen zur Energieerzeugung Anwendung. In der Regel werden die Bauteile, die aus den beschriebenen Nickelbasislegierung bestehen, durch ein Gießverfahren oder durch Sinterverfahren hergestellt. Ein Beispiel für eine entsprechende Legierung wird in der DE 10 2017 007 106 B4 gegeben.

Zunehmend finden jedoch auch additive Herstellungsverfahren unter Verwendung von Nickelbasislegierung Anwendung. Eine hierfür gut geeignete Legierung wird in der WO2018/083065A1 beschrieben.

Ausgehend von dieser Legierung ist es die Aufgabe der Erfindung, die Kriechfestigkeit weiter zu erhöhen und dabei die Mikrorissbildung auf einem niedrigen Niveau zu bewahren oder diese auch noch zu reduzieren.

Die Lösung der Aufgabe besteht in einer Legierung nach Anspruch 1, in einem Bauteil nach Anspruch 5, in einem Pulver nach Anspruch 8 sowie in einem Verfahren nach Anspruch 9.

Die Legierung gemäß Anspruch 1 umfasst dabei eine Nickelbasislegierung, die zumindest folgende Legierungselemente in Gew. % aufweist:

| | |
|---|---|
| Chrom (Cr) | 14,4 - 15,6 |
| Tantal (TA) | 9 - 11 |
| Cobalt (Co) | 5,0 - 5,6 |
| Aluminium (Al) | 4,5 - 5 |
| Wolfram (W) | 3,4 - 4,0 |
| Molybdän (Mo) | 0,9 - 1,1. |

Die Legierung zeichnet sich dadurch aus, dass die Legierungsbestandteile Bor, Tantal und Hafnium folgende Anteile aufweisen:

| | |
|---|---|
| Tantal (Ta) | 9,0 - 11,0 |
| Hafnium (Hf) | 0,3 - 0,6 |
| Bor (B) | 0,04 - 0,06 |

wobei der Rest Nickel, sowie unvermeidbare Verunreinigungen umfasst.

Insbesondere führt das Verhältnis von angegebenen Anteilen an Gew. % der Elemente Tantal, Hafnium und Bor zu einer signifikanten Reduktion der Rissbildung insbesondere der Bildung von Mikrorissen in Bauteilen. Es hat sich herausgestellt, dass die Anpassung genau dieser drei genannten Elemente in der bezüglich des Standes der Technik geänderten Konzentration, zu dem gewünschten Ergebnis der Minimierung der Mikrorissbildung führt. Dabei besteht hierfür die Herausforderung darin, das Optimum in dem Verhältnis genau dieser Elemente zu finden, was in der beschriebenen Legierung mit den engen Toleranzbereichen der Fall ist. Dies trifft insbesondere auf Bauteile zu, die durch additive Herstellungsverfahren hergestellt sind.

Additive Herstellungsverfahren umfassen beispielsweise als Pulverbettverfahren (PBF) das selektive Laserschmelzen (SLM bzw. L-PBF) oder Lasersintern (SLS) oder das Elektronenstrahlschmelzen (EBM bzw. EB-PBF).

Weitere additive Verfahren sind beispielsweise "Directed Energy Deposition (DED)"-Verfahren, insbesondere Laserauftragschweißen (LMD - Laser Metal deposition), Elektronenstrahl- oder Plasma-Pulverschweißen, Drahtschweißen, metallischer Pulverspritzguss, sogenannte "sheet lamination"-Verfahren, oder thermische Spritzverfahren (VPS LPPS, GDCS). Auch das sogenannte Wire Arc Additive Manufacturing (WAAM) ist ein geeignetes Verfahren.

Additive Fertigungsverfahren (englisch: "additive manufacturing") haben sich weiterhin als besonders vorteilhaft für komplexe oder filigran gestaltete Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils weitgehend auf Basis einer entsprechenden CAD-Datei und der Wahl entsprechender Fertigungsparameter erfolgen kann, und damit eine vorteilhafte Alternative - beispielsweise gegenüber der konventionellen gießtechnischen Herstellung von Hochleistungsbauteilen mit den bekannten nachteiligen Prozessschritten - gegeben ist.

Die beschrieben Nickelbasislegierung ist ganz besonders für die Anwendung in einem selektiven Laserschmelzverfahren optimiert. Beim selektiven Laserschmelzen wird der zu verarbeitende Werkstoff in Pulverform in einer dünnen Schicht auf einer Grundplatte aufgebracht. Der pulverförmige Werkstoff wird mittels Laserstrahlung lokal vollständig umgeschmolzen und bildet nach der Erstarrung eine feste Materialschicht. Anschließend wird die Grundplatte um den Betrag einer Schichtdicke abgesenkt und erneut Pulver aufgetragen. Dieser Zyklus wird so lange wiederholt, bis alle Schichten umgeschmolzen sind. Das fertige Bauteil wird vom überschüssigen Pulver gereinigt, nach Bedarf bearbeitet oder sofort verwendet.

Die für den Aufbau des Bauteils typischen Schichtstärken bewegen sich für alle Materialien zwischen 15 und 500 µm. Die Daten für die Führung des Laserstrahls werden mittels einer Software aus einem 3D-CAD-Körper erzeugt. Im ersten Berechnungsschritt wird das Bauteil in einzelne Schichten unterteilt. Im zweiten Berechnungsschritt werden für jede Schicht die Bahnen (Vektoren) erzeugt, die der Laserstrahl abfährt. Um die Kontaminierung des Werkstoffs mit Sauerstoff zu vermeiden, findet der Prozess unter Schutzgasatmosphäre mit Argon oder Stickstoff statt.

Ferner ist es zweckmäßig, wenn der Anteil an Zirkon der Nickelbasislegierung weniger als 0,004 Gew. % beträgt. Auch diese sehr geringe Beigabe an Zirkon trägt zu Reduktion von Mikrorissen bei.

Besonders vorteilhaft ist es für die beschriebene Nickelbasislegierung, wenn die Elemente Silber, Blei, Selen, Gallium, Wismut, Phosphor, Schwefel, Cer so gering wie möglich vorhanden sind und insbesondere weniger als 0,001 Gew. % betragen. Dies trägt ebenfalls zur Reduktion von Mikrorissen bei.

Die Elemente Stickstoff und Sauerstoff sollten ebenfalls so gering wie möglich vorhanden sein und ihr Anteil sollte insbesondere weniger als 0,01 Gew. % betragen.

Ferner ist ein Bauteil, das zumindest teilweise aus der beschriebenen Nickelbasislegierung besteht, Teil der Erfindung. Dieses Bauteil kann bevorzugt durch ein additives Herstellungsverfahren, besonders bevorzugt durch ein selektives Laserschmelzverfahren (SLM bzw. L-PBF) hergestellt sein.

Ein weiterer Bestandteil der Erfindung ist ein Pulver, das die beschriebene Nickelbasislegierung umfasst.

Ferner umfasst die Erfindung ein Verfahren zur Herstellung eines Bauteils, wobei eine Legierung nach einem der Ansprüche 1 bis 4 verwendet wird. Dieses Verfahren ist insbesondere ein additives Herstellungsverfahren, besonders bevorzugt ein selektives Laserschmelzverfahren.

## Patentansprüche

1. Nickelbasislegierung, die zumindest folgende Legierungselemente in Gew. % aufweist:
| | |
|---|---|
| Chrom (Cr) | 14,4 - 15,6 |
| Tantal (TA) | 9 - 11 |
| Cobalt (Co) | 5,0 - 5,6 |
| Aluminium (Al) | 4,5 - 5 |
| Wolfram (W) | 3,4 - 4,0 |
| Molybdän (Mo) | 0,9 - 1,1 |
die Legierung zeichnet sich dadurch aus, dass die Legierungsbestandteile Bor, Tantal und Hafnium folgende Anteile aufweisen:
| | |
|---|---|
| Tantal (Ta) | 9,0 - 11,0 |
| Hafnium (Hf) | 0,3 - 0,6 |
| Bor (B) | 0,04 - 0,06 |
wobei der Rest Nickel, sowie unvermeidbare Verunreinigungen umfasst.

2. Nickelbasislegierung nach Anspruch 1, **dadurch gekennzeichnet, dass** der Anteil an Zirkon weniger als 0,004 Gew. % beträgt.

3. Nickelbasislegierung nach Anspruch 1 oder 2, **dadurch gekennzeichnet, dass** die Elemente Silber, Blei, Selen, Gallium, Wismut, Phosphor, Schwefel, Cer so gering wie möglich vorhanden sind und insbesondere weniger als 0,001 Gew. % betragen.

4. Nickelbasislegierung nach einem der vorhergehenden Ansprüche **dadurch gekennzeichnet, dass** die Anteile von Sauerstoff und Stickstoff so gering wie möglich vorhanden sind und insbesondere weniger als 0,01 Gew. % betragen.

5. Bauteil umfassend eine Legierung nach einem der Ansprüche 1 bis 4.

6. Bauteil nach Anspruch 5, **dadurch gekennzeichnet, dass** das Bauteil mittels eines additiven Herstellungsverfahrens hergestellt ist.

7. Bauteil nach Anspruch 6, **dadurch gekennzeichnet, dass** das Bauteil mittels eines selektiven Laserschmelzverfahrens hergestellt ist.

8. Pulver umfassend eine Legierung nach einem der Ansprüche 1 bis 4.

9. Verfahren zur Herstellung eines Bauteils, **dadurch gekennzeichnet, dass** zur Herstellung des Bauteils eine Legierung nach einem der Ansprüche 1 bis 4 verwendet wird.

10. Verfahren nach Anspruch 9, **dadurch gekennzeichnet, dass** das Bauteil mittels eines additiven Herstellungsverfahrens hergestellt wird.

11. Verfahren nach Anspruch 10, **dadurch gekennzeichnet, dass** das Bauteil mittel seines Laserschmelzverfahrens hergestellt wird.
